# EUROPÄISCHE PATENTSCHRIFT

(11) **EP 2 471 031 B1**
(45) Veröffentlichungstag und Bekanntmachung des Hinweises auf die Patenterteilung: **07.12.2016**
(21) Anmeldenummer: 10750039.9
(22) Anmeldetag: 19.08.2010
(51) Int. Cl.: G06K 19/077

(54) **WERT- UND SICHERHEITSDOKUMENT IN DER FORM EINES BUCHES, VERFAHREN ZUR HERSTELLUNG EINES DERARTIGEN WERT- UND SICHERHEITSDOKUMENTES**
VALUE AND SECURITY DOCUMENT IN THE FORM OF A BOOK AND METHOD FOR PRODUCING SUCH A VALUE AND SECURITY DOCUMENT
DOCUMENT DE VALEUR ET DE SÉCURITÉ SOUS FORME DE LIVRE, PROCÉDÉ DE PRODUCTION D'UN TEL DOCUMENT DE VALEUR ET DE SÉCURITÉ

(30) Priorität: 25.08.2009 DE 102009038802
(43) Veröffentlichungstag der Anmeldung: 04.07.2012
(73) Patentinhaber: Mühlbauer GmbH & Co. KG, 93426 Roding (DE)
(72) Erfinder: FLOECK, Thomas, 93489 Schondorf (DE); SPAETH, Anton, 93437 Furth (DE); ZOLLNER, Franz, 93489 Schorndorf (DE); BRUNNER, Anton, 93444 Bad-Kötzting (DE)
(74) Vertreter: Schmidt, Steffen
(86) Internationale Anmeldenummer: PCT/EP2010/005097
(87) Internationale Veröffentlichungsnummer: WO 2011/023330

(56) Entgegenhaltungen:
- DE-A1-102004 039 567
- FR-A1- 2 900 485

## Beschreibung

### Hintergrund

Hier wird ein Wert- und Sicherheitsdokument, insbesondere für ein Personaldokument in der Form eines Buches, zum Beispiel ein Reisepass oder dergleichen, mit einem ein- oder mehrschichtigen Körper beschrieben. Des Weiteren wird ein Verfahren zur Herstellung eines derartigen Wert- und Sicherheitsdokumentes, sowie dessen Verwendung beschrieben.

Wert- und Sicherheitsdokumente werden heute häufig bis auf Personalisierungsdaten zentral gefertigt und anschließend dezentral, zum Beispiel auf Meldestellen, bei Behörden oder in Unternehmen, die zur Ausstellung derartiger Wert- und Sicherheitsdokumente berechtigt sind, mit einer Personalisierung versehen. Bei der Personalisierung werden den jeweiligen Inhaber des Wert- und Sicherheitsdokuments individuell bezeichnende Text-, Zahlen- und/oder Bilddaten (zum Beispiel Name und Anschrift des Inhabers, Geburtsdatum, Geburtsort, Foto des Inhabers, biometrische Daten des Inhabers, etc.) in das Wert- und Sicherheitsdokument eingetragen. Diese Text-, Zahlen- und/oder Bilddaten sind von einem Betrachter unmittelbar lesbar.

Um steigenden Sicherheitsanforderungen Rechnung zu tragen, werden zunehmend in das Wert- und Sicherheitsdokument Transponderinlays eingesetzt. Derartige Transponderinlays haben eine Substratlage zur Anordnung einer eine Antennenspule und ein Chipmodul umfassenden Transpondereinheit, die sich auf einer Kontaktoberfläche der Substratlage befindet.

In dem Transponder ist ein Chipmodul enthalten, der ein berührungsloses, automatisiertes Auslesen der in einem Chip des Transponders gespeicherten Daten ermöglicht. Derartige Transponder umfassen neben dem Chip eine Antennenspule, die den berührungslosen Datenzugriff ermöglicht. Diese Daten umfassen auch die Text-, Zahlen- und/oder Bilddaten, und / oder die biometrischen Daten des Inhabers.

Solche Transponder in Wert- und Sicherheitsdokumente zu integrieren, die in einem (Dokumenten-)Bucheinband auch noch eine Vielzahl von Papierseiten enthalten, stellt besondere Anforderungen an die Transponderinlays. Derartige Transponderinlays sollen das bisherige Gewicht und Format der Passdokumente möglichst wenig beeinträchtigen. Darüber hinaus soll auch die Handhabung der Passdokumente, also zum Beispiel das Blättern in solchen Dokumenten, möglichst wenig beeinflusst werden. Andererseits ergeben sich aus der Handhabung der Passdokumente besondere mechanische Belastungen für die Transponderinlays bzw. für die auf den Substratlagen der Transponderinlays angeordneten Transponder.

Das Wert- und Sicherheitsdokument kann demnach ein Passbuch mit mehreren Papierseiten für Sichtvermerke (zum Beispiel Visa) sein, bei dem eine Datenseite einen ein- oder mehrschichtigen Körper mit dem Transponder aufweist. Die Datenseite kann entweder zusammen mit den Papierseiten in den Passbuchumschlag eingebunden sein oder an einer Seite des Passbuchumschlages angebracht sein.

Der Transponder, also die Antenne und das Chipmodul, ist auf einem Papier- oder Kunststoffsubstrat aufgebaut und wird meist mit Flüssigklebstoffen, seltener auch mit anderen Klebstoffen, zwischen weiteren Papier- oder papierähnlichen Werkstoffen eingeklebt. Dieses Substrat wird auf eine Seite des Passbuchumschlages geklebt. Auf der Passbuch-Innenseite wird das sog. Vorsatzpapier mit den restlichen Passseiten und der Datenseite eingebunden.

### Stand der Technik

Die WO 2009046791 A1 betrifft ein Transponderinlay für ein Personaldokument und ein Verfahren zu dessen Herstellung. Das Transponderinlay hat eine Substratlage mit einer darauf angeordneten, eine Antennenspule und ein Chipmodul umfassenden Transpondereinheit. Das Transponderinlay hat eine nach oben gewandte Kontaktoberfläche, auf der, ein Drahtleiter spulenförmig angeordnet und in die Kontaktoberfläche eingebettet ist. Freie Drahtleiterenden kontaktieren mit Kontaktflächen eines in der Kontaktoberfläche der Substratlage angeordneten Chipträgers des Chipmoduls.

Das Transponderinlay ist hier Teil zusammenhängender Einbandseiten des Passbuchumschlages. Dazu hat das Transponderinlay im Verbund angeordnete Decklagen. Das Chipmodul ist so in einer Fensteröffnung der Substratlage angeordnet, dass eine Kontaktseite eines Chipträgers im Wesentlichen flächenbündig mit der Kontaktoberfläche der Substratlage ist. Ein sich nach unten vom Chipträger erstreckendes Chipgehäuse ist vollständig in einer Durchgangsöffnung der Fensteröffnung aufgenommen. Eine Gehäuseoberseite befindet sich dabei leicht nach innen in die Fensteröffnung zurückversetzt mit einer Unterseite der Substratlage. Der Chipträger ist mit Stützflächen des Randabsatzes verklebt. Zwischen einer Decklage und der Kontaktoberfläche der Substratlage ist eine die Decklage und das Transponderinlay zu einem fixierten Lagenaufbau verbindende adhäsive Zwischenschicht angeordnet.

Diese adhäsive Zwischenschicht stellt allerdings eine Schwachstelle für die Sicherheit des Wert- oder Sicherheitsdokumentes dar, da mit einem Lösungsmittel nachträglich die adhäsive Zwischenschicht aufgelöst werden kann, so dass das Substrat von den im Verbund angeordneten Decklagen des Personaldokumentes getrennt werden kann. Dadurch werden die Kontaktflächen des Chipmoduls frei zugänglich. Dies ermöglicht eine Manipulation der auf dem Chip gespeicherten Daten oder ein Austauschen des gesamten Chipmoduls. Nach der Manipulation könnte das Substrat erneut mit den in Verbund angeordneten Decklagen des Personaldokumentes verklebt werden. Wird dabei die gleiche oder eine ähnliche adhäsive Schicht verwendet, ist die Manipulation des Wert- oder Sicherheitsdokumentes kaum oder nur mit sehr großem Aufwand feststellbar.

Die nachstehend erläuterten Dokumente beschreiben weitere Möglichkeiten, Transponderinlays in Chipkarten zu integrieren.

Dokument DE 10 2004 042 145 A1 beschreibt ein Chipmodul und ein mit dem Chip des Chipmoduls verbundenes Versteifungselement, wobei ein erster Teil des Versteifungselements kraftschlüssig mit dem Chip verbunden ist, sich der erste Teil des Versteifungselements parallel zur Anschlussebene des Chips erstreckt und ein zweiter Teil des Versteifungselements sich winklig zu dieser Ebene erstreckt.

Dokument DE 199 42 932 A1 beschreibt ein Verfahren zur Herstellung von Chipkarten. Dabei wird auf einen Bogen der mindestens die doppelte Fläche der Chipkarte aufweist eine Falzlinie eingebracht. Weiterhin wird ein Bauelement auf den Bogen aufgebracht und der Bogen auf einer Seite mit einem aktivierbaren Kleber versehen. Dann wird der Bogen entlang der Falzlinie zusammengefaltet, gepresst und gleichzeitig der Kleber aktiviert.

Dokument DE 195 00 925 C2 beschreibt ein Verfahren zur Herstellung einer kontaktlosen Chipkarte. Dabei wird ein Übertragungsmodul zwischen den Kartenkörper bildenden Schichten eingebettet, eine Kavität in den Kartenkörper geschaffen, so dass die Anschlussflächen des Übertragungsmoduls im Bereich der Kavität liegen, und erst danach ein Chipmodul auf die Chipkarte aufgebracht.

Dokument FR 2 900 485 A1 beschreibt ein Transponderinlay für ein Sicherheitsdokument, wobei das Transponderinlay eine auf einem Schichtträger auflaminierte Antenne und einen an den Anschlüssen der Antenne angeschlossenen Transponder umfasst. Dabei sind eine thermoplastische Schicht und eine obere Schicht aus synthetischem Papier derart auf den Schichtträger laminiert, dass die Antenne und der Transponder vom thermoplastischen Material umgeben sind, und die drei Schichten nicht trennbar sind.

### Zugrunde liegende Aufgabe

Die Aufgabe besteht nun darin, ein Wert- und Sicherheitsdokument in der Form eines Buches zu schaffen, das einen erhöhten Schutz gegen Fälschungen aufweist, und das es ermöglicht, bei einer Überprüfung des Wert- und Sicherheitsdokuments eine Fälschung oder einen Manipulationsversuch zu erkennen. Die Aufgabe der Erfindung besteht außerdem darin, ein einfaches und kostengünstiges Verfahren zur Herstellung eines Wert- und Sicherheitsdokuments bzw. dessen Verwendung anzugeben.

### Vorgeschlagene Lösung

Die Aufgabe wird bei dem Wert- und Sicherheitsdokument durch die Merkmale gemäß Anspruch 1 gelöst.

Da die Antennenträgerschicht und die erste Schicht aus einer thermoplastischen Folie gebildet sind, verbinden sich diese während dem Laminieren zu einer Einheit, die nur durch Zerstörung der Schichten gelöst werden kann. Somit sind die Kontaktflächen des Chipmoduls zwischen den thermoplastischen Folien vor einer Manipulation geschützt.

### Ausgestaltungen und Eigenschaften

Das Transponderinlay kann eine zweite Schicht haben, die mit der Antennenträgerschicht verbunden ist und dem Buchumschlag zugewandt ist.

Damit hat das Transponderinlay drei oder mehr Lagen. Der Transponder des Transponderinlays hat ein Substrat, auf dem eine Antenne und ein mit der Antenne verbundenes Chipmodul angebracht sind. Zusätzlich zu dem Substrat sind zwei Schichten, auch Kompensationsschichten genannt, vorgesehen, von denen eine Schicht eine Funktionsschicht sein kann. Die Kompensationsschicht(en) umgibt / umgeben (seitlich) das Transponderchipmodul, wobei das Chipmodul mit seiner von der Antenne abliegenden Oberfläche frei liegen oder von dem Material der Kompensationsschicht(en) eingeschlossen sein kann. Die Funktionsschicht ist hier entweder eine Abdeckschicht aus einem organischen Material, zum Beispiel Sicherheitspapier oder eine andere thermoplastische Folie als die, aus der die Antennenträgerschicht und die ersten Schicht gebildet sind. Im Folgenden wird die andere thermoplastische Folie auch thermoplastische Folie zweiter Art genannt.

Die laminierfähige thermoplastische Folie, auch thermoplastische Folie erster Art genannt, kann ein Material oder mehrere Materialien der Gruppe Polyethylen (PE), Polyvinylchlorid (PVC), Polyethylenterephthalat (PET) oder Glykol-modifiziertes Polyethylenterephthalat (PETG), Polyethylennaphthalat (PEN), Acrylnitril-Butadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polycarbonat (PC) oder deren Derivate enthalten. Sie dient dazu, den Transponder (Chip und Antenne) gegen Umwelteinflüsse wie Luftfeuchtigkeit, Flüssigkeiten, zum Beispiel Wasser, Benzin, Schweiß, oder dergl. zu schützen. Außerdem steigert diese Art thermoplastischer Folie erster Art auch die Fälschungssicherheit.

Die Funktionsschicht (thermoplastische Folie zweiter Art) kann ein Polyolefin (Polyethylen, Polypropylen, etc.) enthalten, um eine Weiterverarbeitung des Transponderinlays mit herkömmlichen Verfahren und Materialien, zum Beispiel ein Verkleben mit wasserbasiertem Nassleim zu ermöglichen. Die Folie zweiter Art wirkt als Deckschicht und kann an Stelle des Polyolefins oder zusätzlich dazu auch Sicherheitspapier enthalten.

Die thermoplastische Folie zweiter Art kann insbesondere ein Material aus ungestrichener einlagiger Polyethylenfolie (PE) enthalten, die einen feinteiligen, im wesentlichen wasserunlöslichen, anorganischen, beispielsweise einen siliziumhaltigen Füllstoff in einer Menge von 50 bis 90 Gewichtsprozent, insbesondere 50 bis 85 Gewichtsprozent (bezogen auf die Basisfolie) einschließt. Der Füllstoff kann vorzugsweise Siliziumdioxid, besonders bevorzugt Siliziumdioxid mit einer durchschnittlichen Höchstteilchengröße von weniger als 0,1 µm sein, der vorzugsweise 35 bis 80% des Gesamtvolumens der Folie zweiter Art besetzt. Solche Folien werden beispielsweise in der US-A-4 937 115 und der US-A-3 351495 offenbart und durch PPG Industries unter dem Handelsnamen Teslin vertrieben.

Die Lagen des Transponderinlays können mit einander und/oder das Transponderinlay kann mit dem Buchumschlag durch eine Hitze- und/oder Druckeinwirkung umfassende Laminierung verbunden werden. Dabei sind für die Materialien der Schichten geeignete Druck- bzw. Temperaturprofile zu wählen.

Die Polyethylen (PE), Polyethylenterephthalat (PET) oder Glykol-modifiziertes Polyethylenterephthalat (PETG) enthaltenden Lagen des Transponderinlays können bei Temperaturen im Bereich von etwa 70 °C bis etwa 160 °C laminiert sein, oder die Polycarbonat (PC) enthaltenden Lagen des Transponderinlays können bei Temperaturen im Bereich von etwa 140 °C bis etwa 260 °C laminiert sein.

Die Antenne kann als Additivantenne, als Subtraktivantenne, als geätzte Antenne, als gedruckte Antenne oder als Drahtantenne an der Antennenträgerschicht angebracht sein.

Das Transponderinlay kann mit dem Buchumschlag durch eine Klebeschicht, vorzugsweise durch einen wasserbasierten Leim oder eine hitzeaktivierbare Folie verbunden sein.

Da Glykol-modifiziertes Polyethylenterephthalat (PETG) sich beim Laminieren, anders als nicht modifiziertes Polyethylenterephthalat (PET), mit anderen Materialien verbindet, ist es nicht notwendig, zusätzliche Kleber zu verwenden. In diesem Fall kann die Klebeschicht zwischen dem Transponderinlay und dem Dokumentbuchumschlag entfallen. Außerdem ist Glykol-modifiziertes Polyethylenterephthalat (PETG) kostengünstiger als zum Beispiel Poly-carbonat (PC).

Der gesamte Aufbau des Dokumentbuchumschlages mit dem Transponderinlay kann in seiner einfachsten Form auch nur einen dreilagigen Verbund haben: (i) den Dokumentbuchumschlag, (ii) die Antennenträgerschicht mit der Antenne und dem Transponderchipmodul, und (iii) die Kompensationsschicht für das Transponderchipmodul, wobei die Antennenträgerschicht dem Dokumentbuchumschlag zugewandt ist und die Kompensationsschicht mit der Antennenträgerschicht verbunden ist. In der Kompensationsschicht ist eine Ausnehmung für das die Antenne kontaktierende Transponderchipmodul vorgesehen. Die Antennenträgerschicht und die Kompensationsschicht sind aus einer thermoplastischen Folie der ersten und/ oder der zweiten Art gebildet. In diesem Fall bildet die Kompensationsschicht auch die Funktionsschicht.

Mit anderen Worten wird ein aus Folien bestehendes Transponderinlay laminiert, das mittels Laminierprozess und / oder mit einem duroplastischen Klebstoff auf dem Dokumentbuchumschlag befestigt wird. Durch diesen Aufbau mit einem Transponderinlay wird eine deutlich höhere Robustheit dieses Dokumentbuchumschlages gegenüber einem herkömmlichen Dokumentbuchumschlag erreicht.

Die laminierbaren Substrate in Form von Folien bilden durch den Laminierprozess das Transponderinlay, welches einen höheren Schutz gegen Zerstörung und Manipulation bietet. Zudem kann ein solches Transponderinlay auch auf den Dokumentbuchumschlag aufilaminiert werden. Dabei kann auch ein duroplastischer Klebstoff im Laminierprozess verwendet werden.

Der Dokumentbuchumschlag kann mit dem Transponderinlay in einem einzigen Laminationsgang hergestellt werden. Alternativ dazu kann auch zuerst das Transponderinlay laminiert werden und daran anschließend kann das Transponderinlay mit dem Dokumentbuchumschlag laminiert oder verklebt werden.

Durch die Einsparung gesonderter Kleber, aber auch durch den einfacheren Aufbau der Gesamtanordnung sowie durch das Herstellen in einem Laminierprozess, der Manipulationen leichter als herkömmliche Anordnungen erkennen lässt, erfüllt das fertige Wert- und Sicherheitsdokument höhere Sicherheitsansprüche. Außerdem ist die Herstellung kostengünstiger, schneller und mit geringerem Ausschuss möglich.

Als Schnittstelle zum Vorsatzpapier in dem Dokumentbuchumschlag und der damit verbundenen herkömmlichen Weiterverarbeitung dient die Funktionsschicht aus Kunststofffolie, Kunstpapier, aber auch Papier oder Karton.

Die Anzahl und Dicke der Folien / Lagen des Transponderinlays in dem Wert- und Sicherheitsdokument richtet sich nach der Höhe des Chipmoduls. Daher ist der Aufbau des Transponderinlays in seiner Dicke der Einzellagen auch der Gesamtdicke anzupassen.

Bei der Laminierung des Transponderinlays mit oder zunächst ohne den Dokumentbuchumschlag werden bei hohem Druck und hoher Temperatur mehrere Schichten, vorzugsweise mit identischem Material, so stoffschlüssig und vorzugsweise ohne Einsatz von Klebstoffen miteinander verbunden, dass ein Transponderinlay mit oder zunächst ohne den Dokumentbuchumschlag entsteht, welches nicht mehr zerstörungsfrei manipuliert werden kann.

Außerdem wird die Verwendung eines oben angegebenen Transponderinlays mit oder zunächst ohne den Dokumentbuchumschlag zur Herstellung eines Wert- und Sicherheitsdokuments angegeben.

### Kurzbeschreibung der Zeichnung

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen. Dabei bilden alle beschriebenen und/oder bildlich dargestellten Merkmale für sich oder in beliebiger Kombination den hier offenbarten Gegenstand, auch unabhängig von ihrer Gruppierung in den Ansprüchen oder deren Rückbeziehungen.
Fig. 1 zeigt in einer ersten Ausgestaltung ein Transponderinlay auf einer Seite eines Dokumentbuchumschlags eines Wert- und Sicherheitsdokuments in einer schematischen Ansicht von der Seite vor dem Laminieren.
Fig. 2 zeigt die Anordnung aus Fig. 1 in einer schematischen Ansicht von der Seite nach dem Laminieren.
Fig. 3 zeigt in einer zweiten Ausgestaltung ein Transponderinlay auf einer Seite eines Dokumentbuchumschlags eines Wert- und Sicherheitsdokuments in einer schematischen Ansicht von der Seite vor dem Laminieren.
Fig. 4 zeigt die Anordnung aus Fig. 3 in einer schematischen Ansicht von der Seite nach dem Laminieren.
Fig. 5 zeigt in einer dritten Ausgestaltung ein Transponderinlay auf einer Seite eines Dokumentbuchumschlags eines Wert- und Sicherheitsdokuments in einer schematischen Ansicht von der Seite vor dem Laminieren.
Fig. 6 zeigt die Anordnung aus Fig. 5 in einer schematischen Ansicht von der Seite nach dem Laminieren.
Fig. 7 zeigt in einer vierten Ausgestaltung ein Transponderinlay auf einer Seite eines Dokumentbuchumschlags eines Wert- und Sicherheitsdokuments in einer schematischen Ansicht von der Seite vor dem Laminieren.
Fig. 8 zeigt die Anordnung aus Fig. 7 in einer schematischen Ansicht von der Seite nach dem Laminieren.
Fig. 9 zeigt eine perspektivische Draufsicht auf ein Transponderinlay und ein Seite des Dokumentbuchumschlags des Wert- und Sicherheitsdokuments vor dem Laminieren.
Fig. 10 zeigt in einer weiteren Ausgestaltung ein Transponderinlay auf einer Seite eines Dokumentbuchumschlags eines Wert- und Sicherheitsdokuments in einer schematischen Ansicht von der Seite vor dem Laminieren.
Fig. 11 zeigt die Anordnung aus Fig. 10 in einer schematischen Ansicht von der Seite nach dem Laminieren.
Fig. 12 zeigt in einer weiteren Ausgestaltung ein Transponderinlay auf einer Seite eines Dokumentbuchumschlags eines Wert- und Sicherheitsdokuments in einer schematischen Ansicht von der Seite vor dem Laminieren.
Fig. 13 zeigt die Anordnung aus Fig. 12 in einer schematischen Ansicht von der Seite nach dem Laminieren.

### Detaillierte Beschreibung von Ausführungsvarianten

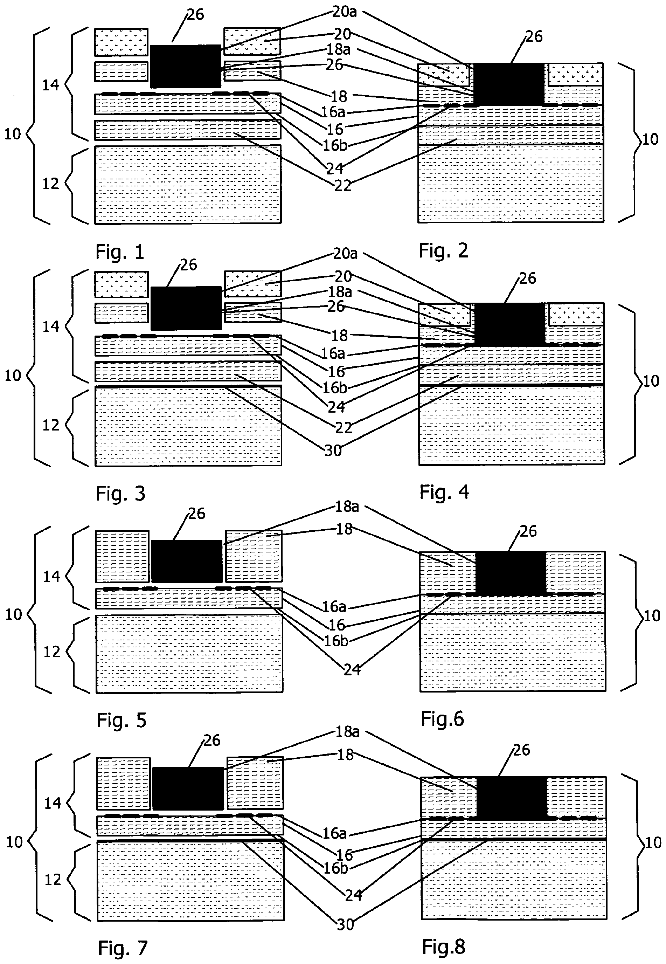

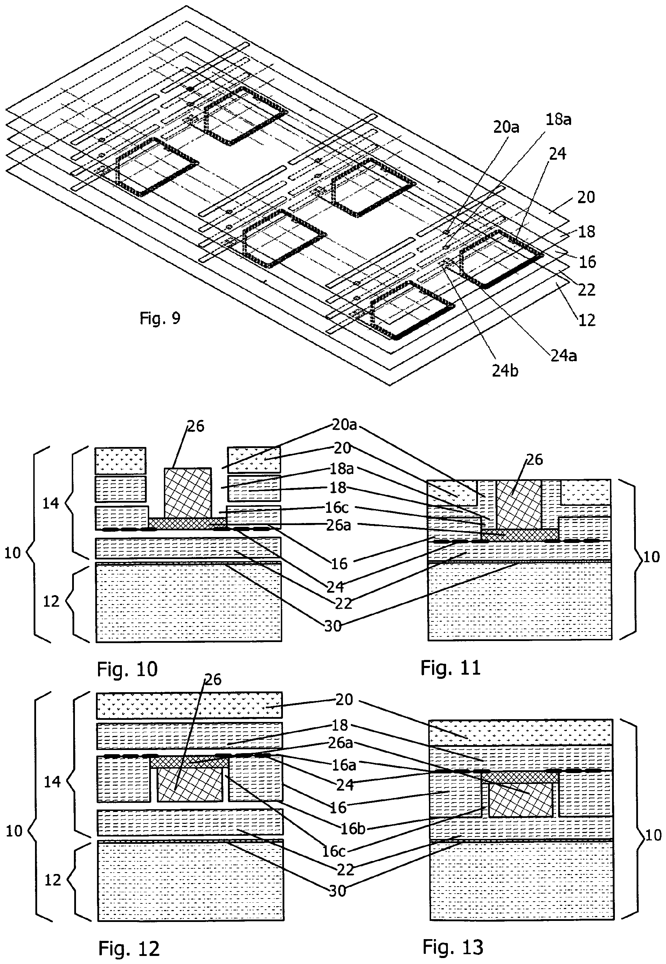

In Fig. 1 ist ein schematischer Querschnitt eines noch nicht laminierten Wert- und Sicherheitsdokuments 10 veranschaulicht, bei dem mehrere übereinander angeordnete Lagen eines Verbundes aus einem Dokumentbuchumschlag 12 des Wert- und Sicherheitsdokumentes 10 und einem an dem Dokumentbuchumschlag 12 anzubringenden Transponderinlay 14 vorgesehen sind. Das Transponderinlay 14 hat in dieser Ausgestaltung eine dem Dokumentbuchumschlag 12 zugewandte Antennenträgerschicht 16, eine mit der Antennenträgerschicht 16 verbundene erste Kompensationsschicht 18, eine mit der ersten Kompensationsschicht 18 verbundene Funktionsschicht 20, und eine mit der Antennenträgerschicht 16 verbundene und dem Dokumentbuchumschlag 12 zugewandte zweite Kompensationsschicht 22. Auf der Antennenträgerschicht 16 ist, der ersten Kompensationsschicht 18 zugewandt, eine Antenne 24 aufgebracht. Die Antenne 24 kann als Additivantenne, als Subtraktivantenne, als geätzte Antenne, als gedruckte Antenne oder als Drahtantenne auf einer Oberfläche 16a, oder alternativ zu dem in Fig. 1 dargestellten Ausführungsbeispiel auf einer Oberfläche 16b, der Antennenträgerschicht 16 ausgebildet sein und hat Antennenkontaktstellen 24a, 24b - siehe Fig. 9. Dabei kann die Antenne auch zumindest teilweise in das Material der Antennenträgerschicht 16 und / oder der Kompensations- oder Deckschicht eingegraben sein, wenn - wie weiter unten beschrieben - die einzelnen Schichten miteinander unter Temperatur- und/oder Druckeinwirkung zu einer integralen Einheit laminiert werden. In der ersten Kompensationsschicht 18 und in der Funktionsschicht 20 ist jeweils eine Ausnehmung 18a, 20a für ein die Antenne 24 kontaktierendes Transponderchipmodul 26 vorgesehen. Die Antennenträgerschicht 16 und die erste Kompensationsschicht 18 sind aus einer thermoplastischen Folie erster Art und die Funktionsschicht aus einer thermoplastischen Folie zweiter Art gebildet.

Die thermoplastische Folie erster Art enthält ein Material oder mehreren Materialien der Gruppe Polyethylen (PE), Polyvinylchlorid (PVC), Polyethylenterephthalat (PET) oder Glykol-modifiziertes Polyethylenterephthalat (PETG), Polyethylennaphthalat (PEN), AcrylnitrilButadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polycarbonat (PC) oder deren Derivate.

Die thermoplastische Folie zweiter Art wirkt als Deckschicht und enthält in den hier veranschaulichten Ausführungsformen ein Material aus ungestrichener einlagiger Polyethylenfolie (PE), die einen feinteiligen, im wesentlichen wasserunlöslichen, anorganischen, beispielsweise einen siliciumhaltigen Füllstoff in einer Menge von 50 bis 90 Gew.-%, insbesondere 50 bis 85 Gew.-% (bezogen auf die thermoplastische Basisfolie zweiter Art) einschließt. Der Füllstoff ist vorzugsweise Siliziumdioxid, besonders bevorzugt Siliziumdioxid mit einer durchschnittlichen Höchstteilchengröße von weniger als 0,1 µm, der vorzugsweise 35 bis 80% des Gesamtvolumens der Folie zweiter Art besetzt. Diese Deckschicht kann thermoplastisches Polyolefin und / oder Sicherheitspapier enthalten.

Die Antennenträgerschicht 16 hat in diesem Beispiel eine Dicke von etwa 100 µm. Die erste Kompensationsschicht 18 hat in diesem Beispiel eine Dicke von etwa 100 µm. Die Funktionsschicht 20 hat in diesem Beispiel eine Dicke von etwa 150 µm. Die zweite Kompensationsschicht 22 hat in diesem Beispiel eine Dicke von etwa 100 µm. Der Dokumentbuchumschlag 12 hat in diesem Beispiel eine Dicke von etwa 340 µm und ist aus einem Textilmaterial, zum Beispiel Baumwolle gebildet. Die vorstehend angegebenen Abmessungen sind als Beispiele zu verstehen, in konkreten Anwendungen können die Abmessungen der einzelnen Schichten hiervon auch abweichen.

Die mit einander das Transponderinlay 14 bildenden Lagen und der Dokumentbuchumschlag 12 sind in der in Fig. 2 veranschaulichten Weise durch eine Hitze- und Druckeinwirkung umfassende Laminierung verbunden. Dabei wird abhängig vom verwendeten Material in einem geeigneten Temperaturbereich und einem geeigneten Druckbereich laminiert. Wenn das Transponderinlay 14 aus Lagen aus Polyethylen (PE), Polyethylenterephthalat (PET) oder Glykol-modifiziertem Polyethylenterephthalat (PETG) gebildet ist, wird zum Beispiel bei einer Temperatur von etwa 120°C und entsprechendem Druck laminiert. Wenn das Transponderinlay 14 aus Lagen aus Polycarbonat (PC) gebildet ist, wird zum Beispiel bei einer Temperatur von etwa 200°C und entsprechendem Druck laminiert.

Eine weitere Ausgestaltung des Wert- und Sicherheitsdokuments mit einem Transponderinlay 14 ist in den Fig. 3 (unlaminiert) und Fig. 4 (laminiert) veranschaulicht, bei dem das Transponderinlay 14 mit dem Dokumentbuchumschlag 12 durch eine Klebeschicht 30, hier in Form einer hitzeaktivierbaren Folie 30 verbunden ist. Diese hitzeaktivierbare Folie 30 kann eine duroplastische Klebefolie oder eine wasserbasierte Klebefolie sein und befindet sich zwischen dem Dokumentbuchumschlag 12 und der dem Dokumentbuchumschlag 12 zugewandten zweiten Kompensationsschicht 22. Das Transponderinlay 14 kann auch mittels des Laminierprozesses und / oder mit einem duroplastischen Klebstoff auf dem Dokumentbuchumschlag 12 befestigt werden.

Eine weitere Ausgestaltung des Wert- und Sicherheitsdokuments mit einem Transponderinlay 14 ist in den Fig. 5 (unlaminiert) und Fig. 6 (laminiert) veranschaulicht, wobei der gesamte Aufbau des Dokumentbuchumschlags 12 mit dem Transponderinlay 14 einen dreilagigen Verbund hat. Der gesamte Aufbau umfasst den Dokumentbuchumschlag 10, die Antennenträgerschicht 16 mit der Antenne 24 und dem Transponderchipmodul 26, und die Kompensationsschicht 18 für den Chip. Dabei ist die Antennenträgerschicht 16 dem Dokumentbuchumschlag 12 zugewandt und die Kompensationsschicht 18 ist mit der Antennenträgerschicht 16 verbunden. In der Kompensationsschicht 18 ist eine Ausnehmung 18a für das die Antenne 24 kontaktierende Transponderchipmodul 26 vorgesehen. Die Antennenträgerschicht 16 und die Kompensationsschicht 18 sind aus einer thermoplastischen Folie der ersten oder der zweiten Art gebildet.

Das Transponderinlay 14 wird auf den Dokumentbuchumschlag 12 in einem einzigen gemeinsamen Laminationsvorgang auflaminiert, wobei der Dokumentbuchumschlag mit dem Transponderinlay als eine Einheit hergestellt wird.

Durch die Temperatur- und Druckeinwirkung während des Laminationsvorgangs auf die das Transponderchipmodul 26 umgebenden Schichten, also die (erste) Kompensationsschicht 18, verformen sich diese. Dabei kann das Temperatur- und Druckprofil so geeignet gewählt sein, dass sich die Funktionsschicht 20 nicht verformt. Im Ergebnis schließen sich die Ausnehmungen 20a bzw. 18a soweit, dass das Transponderchipmodul 26 an seinen Seitenflächen von dem Material der das Transponderchipmodul 26 umgebenden Schichten vollständig eingeschlossen ist. Lediglich die von der Antennenträgerschicht 16 abgewandte Oberseite des Transponderchipmoduls 26 liegt frei und ist nicht von umgebenden Schichtmaterial eingeschlossen.

Während in den Fig. 1 - 8 Ausgestaltungen von Laminaten gezeigt sind, bei denen das Chipmodul nach oben - also weg von dem Dokumentbucheinband - zeigt (sog. mold up Variante), sind in vergleichbarer Weise auch Laminate möglich, bei denen das Chipmodul nach unten - also hin zu dem Dokumentbucheinband - zeigt (sog. mold down Variante). Auch bei Laminaten, bei denen das Chipmodul nach unten zeigt, kann das Transponderinlay bestehend aus der Antennenträgerschicht mit der Antenne und dem Transponderchipmodul sowie der Kompensationsschicht für den Chip auf den Dokumentbuchumschlag in einem einzigen gemeinsamen Laminationsvorgang auflaminiert werden, wobei der Dokumentbuchumschlag mit dem Transponderinlay als eine Einheit hergestellt wird.

So veranschaulicht Fig. 10 einen schematischen Querschnitt eines noch nicht laminierten Wert- und Sicherheitsdokuments 10, bei dem mehrere übereinander angeordnete Lagen eines Verbundes aus einem Dokumentbuchumschlag 12 des Wert- und Sicherheitsdokumentes 10 und einem an dem Dokumentbuchumschlag 12 anzubringenden Transponderinlay 14 vorgesehen sind. Das Transponderinlay 14 hat in dieser Ausgestaltung eine dem Dokumentbuchumschlag 12 zugewandte Antennenträgerschicht 16, eine mit der Antennenträgerschicht 16 verbundene erste Kompensationsschicht 18, eine mit der ersten Kompensationsschicht verbundene Funktionsschicht 20, und eine mit der Antennenträgerschicht 16 verbundene und dem Dokumentbuchumschlag 12 zugewandte zweite Kompensationsschicht 22. Auf der Antennenträgerschicht 16 ist, der zweiten Kompensationsschicht 22 zugewandt, eine Antenne 24 aufgebracht. Die Antenne 24 ist als Additivantenne, als Subtraktivantenne, als geätzte Antenne, als gedruckte Antenne oder als Drahtantenne auf einer Oberfläche 16a, oder alternativ zu dem in Fig. 10 dargestellten Ausführungsbeispiel auf einer Oberfläche 16b, der Antennenträgerschicht 16 ausgebildet und hat Antennenkontaktstellen, die mit gegengleichen, an einem Chipkontaktsubstrat 26a befindlichen Kontakten des Transponderchipmoduls 26 in elektrischem Kontakt stehen. Dabei kann die Antenne auch zumindest teilweise in das Material der Antennenträgerschicht 16 und / oder der Kompensations- oder Deckschicht eingegraben sein, wenn die einzelnen Schichten miteinander unter Temperatur- und/oder Druckeinwirkung zu einer integralen Einheit laminiert werden. In der Antennenträgerschicht 16, der ersten Kompensationsschicht 18 und in der Funktionsschicht 20 ist jeweils eine Ausnehmung 16c, 18a, 20a für das Transponderchipmodul 26 vorgesehen. Die Antennenträgerschicht 16 und die erste Kompensationsschicht 18 sind aus einer thermoplastischen Folie erster Art und die Funktionsschicht aus einer thermoplastischen Folie zweiter Art gebildet.

Die mit einander das Transponderinlay 14 bildenden Lagen und der Dokumentbuchumschlag 12 sind in der in Fig. 11 veranschaulichten Weise durch eine Hitze- und Druckeinwirkung umfassende Laminierung verbunden. Dabei wird abhängig vom verwendeten Material in einem geeigneten Temperaturbereich und einem geeigneten Druckbereich laminiert. Material der ersten Kompensationsschicht 18 dringt dabei in einen Ringspalt ein, der in der Ausnehmung 16c, 18a, 20a um das Transponderchipmodul 26 herum gebildet ist und sorgt für einen innigen, sicheren Zusammenhalt der einzelnen Lagen und der Komponenten.

Ähnlich ist auch in Fig. 12 ein schematischer Querschnitt eines noch nicht laminierten Wert- und Sicherheitsdokuments 10 gezeigt, bei dem mehrere übereinander angeordnete Lagen eines Verbundes aus einem Dokumentbuchumschlag 12 des Wert- und Sicherheitsdokumentes 10 und einem an dem Dokumentbuchumschlag 12 anzubringenden Transponderinlay 14 vorgesehen sind. Das Transponderinlay 14 hat in dieser Ausgestaltung eine dem Dokumentbuchumschlag 12 zugewandte Antennenträgerschicht 16, eine mit der Antennenträgerschicht 16 verbundene erste Kompensationsschicht 18, eine mit der ersten Kompensationsschicht verbundene Funktionsschicht 20, und eine mit der Antennenträgerschicht 16 verbundene und dem Dokumentbuchumschlag 12 zugewandte zweite Kompensationsschicht 22. Auf der Antennenträgerschicht 16 ist, der zweiten Kompensationsschicht 22 abgewandt, eine Antenne 24 aufgebracht. Die Antenne 24 ist als Additivantenne, als Subtraktivantenne, als geätzte Antenne, als gedruckte Antenne oder als Drahtantenne auf einer Oberfläche 16a, oder alternativ zu dem in Fig. 12 dargestellten Ausführungsbeispiel auf einer Oberfläche 16b der Antennenträgerschicht 16 ausgebildet und hat Antennenkontaktstellen, die mit gegengleichen, an einem Chipkontaktsubstrat 26a befindlichen Kontakten des Transponderchipmoduls 26 in elektrischem Kontakt stehen. Dabei kann die Antenne auch zumindest teilweise in das Material der Antennenträgerschicht 16 und / oder der Kompensations- oder Deckschicht eingegraben sein, wenn die einzelnen Schichten miteinander unter Temperatur- und/oder Druckeinwirkung zu einer integralen Einheit laminiert werden. In der Antennenträgerschicht 16 ist eine Ausnehmung 16c für das Transponderchipmodul 26 vorgesehen. Die Antennenträgerschicht 16 und die erste Kompensationsschicht 18 sind aus einer thermoplastischen Folie erster Art und die Funktionsschicht aus einer thermoplastischen Folie zweiter Art gebildet.

Die mit einander das Transponderinlay 14 bildenden Lagen und der Dokumentbuchumschlag 12 sind in der in Fig. 13 veranschaulichten Weise durch eine Hitze- und Druckeinwirkung umfassende Laminierung verbunden. Dabei wird abhängig vom verwendeten Material in einem geeigneten Temperaturbereich und einem geeigneten Druckbereich laminiert. Material der zweiten Kompensationsschicht 22 dringt dabei in den Ringspalt ein, der in der Ausnehmung 16c um das Transponderchipmodul 26 herum gebildet ist und sorgt für einen innigen, sicheren Zusammenhalt der einzelnen Lagen und der Komponenten. Die Funktionsschicht und die erste Kompensationsschicht sind bei dieser Variante durchgehend, das heißt ohne Ausnehmung für das Transponderchipmodul 26 ausgestaltet. Dies bietet zusätzlichen Schutz gegen ungewünschte Manipulation.

Die in den Fig. 10 - 13 gezeigte Klebschicht 30 kann - in den Ausgestaltungen der Fig. 1, 2 und 5, 6 - auch weggelassen werden.

Die vorstehend erläuterten Erzeugnis- und Verfahrensdetails sind zwar im Zusammenhang dargestellt; es sei jedoch darauf hingewiesen, dass sie auch unabhängig von einander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

## Patentansprüche

1. Wert- und Sicherheitsdokument (10) mit einem als Verbund an einem Dokumentbuchumschlag (12) des Wert- und Sicherheitsdokumentes angebrachten Transponderinlay (14), das drei Lagen aufweist:
- eine Antennenträgerschicht (16), die an ihrer dem Dokumentbuchumschlag (12) abgewandten Oberfläche (16a) eine Antenne (24) trägt,
- eine mit der Antennenträgerschicht (16) verbundene erste Schicht (18), in der die Antenne (24) durch Laminieren zumindest teilweise eingegraben ist, und
- eine mit der ersten Schicht (18) verbundene, als Deckschicht ausgebildete Funktionsschicht (20),
wobei
- in der Funktionsschicht (20) eine Ausnehmung für ein die Antenne (24) kontaktierendes Transponderchipmodul (26) vorgesehen ist, und **dadurch gekennzeichnet, dass**
- in der ersten Schicht (18) eine Ausnehmung (16c, 18a, 20a) für das Transponderchipmodul (26) vorgesehen ist, und
- die Antennenträgerschicht (16) und die erste Schicht (18) aus einer laminierfähigen thermoplastischen Folie gebildet sind.

2. Wert- und Sicherheitsdokument (10) mit einem Transponderinlay (14) nach Anspruch 1, mit einer zweiten Schicht (22), die mit der Antennenträgerschicht (16) verbunden ist und dem Dokumentbuchumschlag (12) zugewandt ist.

3. Wert- und Sicherheitsdokument (10) mit einem Transponderinlay (14) nach Anspruch 1, wobei die Funktionsschicht (20) eine andere thermoplastische Folie als die, aus der die Antennenträgerschicht (16) und die erste Schicht (18) gebildet sind oder Sicherheitspapier aufweist.

4. Wert- und Sicherheitsdokument (10) mit einem Transponderinlay (14) nach einem der vorhergehenden Ansprüche, bei dem die thermoplastische Folie aus der die Antennenträgerschicht (16) und die ersten Schicht (18) gebildet sind ein Material oder mehreren Materialien der Gruppe Polyethylen (PE), Polyvinylchlorid (PVC), Polyethylenterephthalat (PET) oder Glykol-modifiziertes Polyethylenterephthalat (PETG), Polyethylennaphthalat (PEN), AcrylnitrilButadien-Styrol-Copolymerisat (ABS), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polycarbonat (PC) oder deren Derivate enthalten.

5. Wert- und Sicherheitsdokument (10) mit einem Transponderinlay (14) nach einem der vorhergehenden Ansprüche, bei dem die Funktionsschicht ein Material aus ungestrichener einlagiger Polyethylenfolie (PE) enthält, die einen feinteiligen, im wesentlichen wasserunlöslichen, anorganischen, beispielsweise einen siliziumhaltigen Füllstoff in einer Menge von 50 bis 90 Gewichtsprozent, insbesondere 50 bis 85 Gewichtsprozent (bezogen auf die Basisfolie) einschließt.

6. Wert- und Sicherheitsdokument (10) mit einem Transponderinlay (14) nach dem vorhergehenden Anspruch, bei dem der Füllstoff vorzugsweise Siliziumdioxid, besonders bevorzugt Siliziumdioxid mit einer durchschnittlichen Höchstteilchengröße von weniger als 0,1 µm ist, der vorzugsweise 35 bis 80% des Gesamtvolumens der anderen thermoplastischen Folie besetzt.

7. Wert- und Sicherheitsdokument (10) mit einem Transponderinlay (14) nach einem der vorhergehenden Ansprüche, bei dem die Lagen des Transponderinlays (14) mit einander und/oder das Transponderinlay (14) mit dem Dokumentbuchumschlag (12) durch Hitze- und/oder Druckeinwirkung umfassende Laminierung mit für die Materialien der Schichten geeignetem Druck- bzw. Temperaturprofil verbunden sind.

8. Wert- und Sicherheitsdokument (10) mit einem Transponderinlay (14) nach dem vorhergehenden Anspruch, bei dem die Polyethylen (PE), Polyethylenterephthalat (PET) oder Glykol-modifiziertes Polyethylenterephthalat (PETG) enthaltenden Lagen bei Temperaturen im Bereich von etwa 70 °C bis etwa 160 °C laminiert sind, oder die Polycarbonat (PC) enthaltenden Lagen des Transponderinlays bei Temperaturen im Bereich von etwa 140 °C bis etwa 260 °C laminiert sind.

9. Wert- und Sicherheitsdokument (10) mit einem Transponderinlay (14) nach einem der vorhergehenden Ansprüche, wobei die Antenne (24) als Additivantenne, als Subtraktivantenne, als geätzte Antenne, als gedruckte Antenne oder als Drahtantenne an der Antennenträgerschicht (16) angebracht ist.

10. Wert- und Sicherheitsdokument (10) mit einem Transponderinlay (14) nach einem der vorhergehenden Ansprüche, wobei das Transponderinlay (14) mit dem Dokumentbuchumschlag (12) durch eine Klebeschicht, vorzugsweise durch einen wasserbasierten Klebstoff oder durch eine hitzeaktivierbare, zum Beispiel duroplastische Folie (30) verbunden ist.

11. Wert- und Sicherheitsdokument (10) mit einem Transponderinlay (14) nach einem der vorhergehenden Ansprüche, wobei der gesamte Aufbau des Dokumentbuchumschlags (12) mit dem Transponderinlay (14) einen dreilagigen Verbund hat: (i) den Dokumentbuchumschlag (12), (ii) die Antennenträgerschicht (16) mit der Antenne (24) und dem Transponderchipmodul (26), und (iii) die zweite Schicht (22) für das Transponderchipmodul (26), wobei die Antennenträgerschicht (16) dem Dokumentbuchumschlag (12) zugewandt ist und die Schicht (22) mit der Antennenträgerschicht (16) verbunden ist, in der Schicht (22) eine Ausnehmung (22a) für das die Antenne (24) kontaktierende Transponderchipmodul (26) vorgesehen ist, und die Antennenträgerschicht (16) und die zweite Schicht (22) aus der laminierfähigen thermoplastischen Folie und/oder aus der anderen thermoplastischen Folie gebildet sind.

12. Wert- und Sicherheitsdokument (10) mit einem Transponderinlay (14) nach einem der vorhergehenden Ansprüche, wobei die erste Schicht (18) mit der Antennenträgerschicht (16) derart laminiert ist, dass die Antenne (24) in den Schichten (16,18) zumindest teilweise eingegraben ist, und/oder wobei eine Dicke der ersten Schicht (18) derart bestimmt ist, dass das Transponderchipmodul (26) an seinen Seitenflächen von den Schichten (16,18) vollständig eingeschlossen ist, und/oder wobei Material der ersten Schicht (18) in die Ausnehmung (16c, 18a, 20a) um das Transponderchipmodul (26) herum eingedrungen ist.

13. Verfahren zur Herstellung eines Wert- und Sicherheitsdokuments, insbesondere eines Personaldokuments, ein Reisepasses oder dergl., unter Verwendung eines aus Folien bestehenden laminierten Transponderinlays das drei Lagen aufweist:
- eine aus einer laminierfähigen thermoplastischen Folie bestehende Antennenträgerschicht (16), die an ihrer dem Dokumentbuchumschlag (12) abgewandten Oberfläche (16a) eine Antenne (24) trägt,
- eine mit der Antennenträgerschicht (16) verbundene erste Schicht (18) aus einer laminierfähigen thermoplastischen Folie, und
- eine mit der ersten Schicht (18) verbundene, als Deckschicht ausgebildete Funktionsschicht (20),
- wobei in der Funktionsschicht (20) eine Ausnehmung für ein die Antenne (24) kontaktierendes Transponderchipmodul (26) geformt wird, und **dadurch gekennzeichnet, dass** in der ersten Schicht (18) eine Ausnehmung (16c, 18a, 20a) zur Aufnahme des Transponder-Chipmoduls (26) vorgesehen wird, und
- wobei das Transponderinlay mittels Laminierprozess und / oder mit einem Klebstoff auf einem Dokumentbuchumschlag befestigt wird.

14. Verfahren zur Herstellung eines Wert- und Sicherheitsdokuments nach Anspruch 12, bei dem das Transponderinlay auf den Dokumentbuchumschlag auflaminiert wird, und wobei vorzugsweise der Passbuchrücken mit dem Transponderinlay in einem einzigen Laminationsgang hergestellt wird.

15. Verfahren zur Herstellung eines Wert- und Sicherheitsdokuments nach Anspruch 12 oder 13, bei dem bei der Laminierung bei hohem Druck und hoher Temperatur mehrere Schichten, vorzugsweise mit identischem Material, so miteinander verbunden werden, dass ein Transponderinlay entsteht.

## Claims

1. Value and security document (10) having a transponder inlay (14) to be attached as a composite to a document book cover (12) of the value and security document, and which has three layers:
- an antenna carrier layer (16), which on its surface (16a) facing away from the document book cover (12) carries an antenna (24),
- a first layer (18) which is joined to the antenna carrier layer (16), and in which the antenna (24) is at least partly buried by lamination, and
- a function layer (20) which is joined to the first layer (18) and in the form of a covering layer,
wherein
- the function layer (20) is provided with a recess for a transponder chip module (26) contacting the antenna (24), and **characterized in that**
- the first layer (18) is provided with a recess (16c, 18a, 20a) for the transponder chip module (26), and
- the antenna carrier layer (16) and the first layer (18) are formed of a laminatable thermoplastic film.

2. Value and security document (10) with a transponder inlay (14) according to claim 1, with a second layer (22), which is connected to the antenna carrier layer (16) and faces the document book cover (12).

3. Value and security document (10) with a transponder inlay (14) according to claim 1, wherein the function layer (20) has a different thermoplastic film as the thermoplastic film forming the antenna layer (16) and the first layer (18) or security paper.

4. Value and security document (10) with a transponder inlay (14) according to any one of the preceding claims, wherein the thermoplastic film of the first type includes one or more materials of the following group: polyethylene (PE), polyvinyl chloride (PVC), polyethylene terephthalate (PET) or glycol-modified polyethylene terephthalate (PETG), polyethylene naphthalate (PEN), acrylonitrile butadiene styrene copolymerisate (ABS), polyvinyl butyral (PVB), polymethyl methacrylate (PMMA), polyimide (PI), polyvinyl alcohol (PVA), polystyrene (PS), polyvinylphenol (PVP), polypropylene (PP), polycarbonate (PC) or their derivatives.

5. Value and security document (10) with a transponder inlay (14) according to any one of the preceding claims, wherein the function layer includes a material of uncoated single-layer polyethylene film (PE), which encloses a finely divided, essentially water-insoluble, inorganic filler, e.g. containing silicon, in a quantity of 50 to 90% by weight, in particular 50 to 85% by weight (relative to the base film).

6. Value and security document (10) with a transponder inlay (14) according to the preceding claim, wherein the filler is preferably silicon dioxide, specially preferably silicon dioxide with a mean maximum particle size of less than 0.1 µm, and preferably has 35 to 80% of the total volume of the different thermoplastic film.

7. Value and security document (10) with a transponder inlay (14) according to any one of the preceding claims, wherein the layers of the transponder inlay (14) are joined to one another and/or the transponder inlay (14) is joined to the document book cover (12) by lamination comprising the action of heat and/or pressure, with suitable pressure and temperature profiles for the materials of the layers.

8. Value and security document (10) with a transponder inlay (14) according to the preceding claim, wherein the layers containing polyethylene (PE), polyethylene terephthalate (PET) or glycol-modified polyethylene terephthalate (PETG) are laminated at temperatures in the range of about 70 °C to about 160 °C, or the layers of the transponder inlay containing polycarbonate (PC) are laminated at temperatures in the range of about 140 °C to about 260 °C.

9. Value and security document (10) with a transponder inlay (14) according to any one of the preceding claims, wherein the antenna (24) is attached to the antenna carrier layer (16) as an additive antenna, subtractive antenna, etched antenna, printed antenna or wire antenna.

10. Value and security document (10) with a transponder inlay (14) according to any one of the preceding claims, wherein the transponder inlay (14) is joined to the document book cover (12) by an adhesive layer, preferably by a water-based adhesive or a heat-activatable, e.g. thermosetting, film.

11. Value and security document (10) with a transponder inlay (14) according to any one of the preceding claims, wherein the whole structure of the document book cover (12) with the transponder inlay (14) has a composite of three layers: (i) the document book cover (12), (ii) the antenna carrier layer (16) with the antenna (24) and the transponder chip module (26), and (iii) the second layer (22) for the transponder chip module (26), the antenna carrier layer (16) facing the document book cover (12) and the layer (22) being connected to the antenna carrier layer (16), and in the layer (22), a recess (22a) for the transponder chip module (26), which contacts the antenna (24), is provided, and the antenna carrier layer (16) and the second layer (22) are made of the laminatable thermoplastic film and/or the different thermoplastic film.

12. Value and security document (10) with a transponder inlay (14) according to any one of the preceding claims, wherein the first layer (18) is laminated with the antenna carrier layer (16) such that the antenna (24) is buried at least partially in the layers (16, 18), and/or the thickness of the first layer (18) is determined such that side surfaces of the transponder chip module (26) are completely enclosed by the layers (16, 18), and/or material of the first layer (18) enters the recess (16c, 18a, 20a) around the transponder chip module (26).

13. Method for producing a value and security document, in particular a personal document, passport or similar, using a laminated transponder inlay which consists of films, and which has three layers:
- an antenna carrier layer (16) which consists of laminatable thermoplastic film, and which carries an antenna (24) on its surface (16a) facing away from the document book cover (12),
- a first layer (18) which is joined to the antenna carrier layer (16) and made of a laminatable thermoplastic film, and
- a function layer (20) which is joined to the first layer (18) and in the form of a covering layer,
- wherein in the function layer (20) a recess for a transponder chip module (26) which contacts the antenna (24) is formed, and **characterized in that** the first layer (18) is provided with a recess for receiving the transponder chip module (26), and
- wherein the transponder inlay is fixed to a document book cover by a lamination process and/or using an adhesive.

14. Method for producing a value and security document according to claim 12, wherein the transponder inlay is laminated onto the document book cover, and wherein preferably the back of the passport book is produced with the transponder inlay in a single lamination operation.

15. Method for producing a value and security document according to claim 12 or 13, wherein during the lamination at high pressure and high temperature, multiple layers, preferably of identical material, are joined to each other so that a transponder inlay results.

## Revendications

1. Document de valeur et de sécurité (10) avec un insert de transpondeur (14) appliqué sous forme reliée sur une couverture de document (12) du document de valeur et de sécurité, et qui présente trois couches :
- une couche support d'antenne (16) qui porte une antenne (24) sur sa surface (16a) opposée à la couverture de document (12),
- une première couche (18) reliée à la couche support d'antenne (16), dans laquelle l'antenne (24) est enfouie au moins partiellement par stratification, et
- une couche fonctionnelle (20) reliée à la première couche (18), réalisée comme couche supérieure,
dans lequel
- un évidement est prévu dans la couche fonctionnelle (20) pour un module à puce de transpondeur (26) en contact avec l'antenne (24),
**caractérisé en ce que**
- un évidement (16c, 18a, 20a) est prévu pour le module à puce de transpondeur (26) dans la première couche (18), et
- la couche support d'antenne (16) et la première couche (18) sont formées d'une feuille thermoplastique stratifiable.

2. Document de valeur et de sécurité (10) avec un insert de transpondeur (14) selon la revendication 1, comprenant une deuxième couche (22) qui est reliée à la couche support d'antenne (16) et tournée vers la couverture de document (12).

3. Document de valeur et de sécurité (10) avec un insert de transpondeur (14) selon la revendication 1, dans lequel la couche fonctionnelle (20) présente une autre feuille thermoplastique que celle dont sont formées la couche support d'antenne (16) et la première couche (18) ou un papier de sécurité.

4. Document de valeur et de sécurité (10) avec un insert de transpondeur (14) selon l'une des revendications précédentes, dans lequel la feuille thermoplastique dont sont formées la couche support d'antenne (16) et la première couche (18) contient un matériau ou plusieurs matériaux du groupe polyéthylène (PE), polychlorure de vinyle (PVC), polyéthylène téréphtalate (PET) ou polyéthylène téréphtalate modifié au glycol (PETG), polyéthylène naphtalate (PEN), copolymère d'acrylonitrile butadiène styrène (ABS), polyvinyle butyral (PVB), polyméthacrylate de méthyle (PMMA), polyimide (PI), alcool polyvinylique (PVA), polystyrène (PS), polyvinylphénol (PVP), polypropylène (PP), polycarbonate (PC) ou leurs dérivés.

5. Document de valeur et de sécurité (10) avec un insert de transpondeur (14) selon l'une des revendications précédentes, dans lequel la couche fonctionnelle contient un matériau composé d'une feuille en polyéthylène (PE) monocouche non couchée qui inclut une charge inorganique finement divisée, sensiblement insoluble dans l'eau, par exemple siliceuse, dans une quantité de 50 à 90 pour cent en poids, en particulier 50 à 85 pour cent en poids (par rapport à la feuille de base).

6. Document de valeur et de sécurité (10) avec un insert de transpondeur (14) selon la revendication précédente, dans lequel la charge est de préférence du dioxyde de silicium, de façon plus préférée du dioxyde de silicium ayant une taille maximale de particules moyenne inférieure à 0,1 µm, qui occupe de préférence de 35 à 80 % du volume total de l'autre feuille thermoplastique.

7. Document de valeur et de sécurité (10) avec un insert de transpondeur (14) selon l'une des revendications précédentes, dans lequel les couches de l'insert de transpondeur (14) sont reliées entre elles et/ou l'insert de transpondeur (14) est relié à la couverture de document (12) par stratification comprenant l'action de la chaleur et/ou de la pression avec un profil de pression ou de température adapté aux matériaux des couches.

8. Document de valeur et de sécurité (10) avec un insert de transpondeur (14) selon la revendication précédente, dans lequel les couches contenant du polyéthylène (PE), du polyéthylène téréphtalate (PET) ou du polyéthylène téréphtalate modifié au glycol (PETG) sont stratifiées à des températures comprises entre environ 70 °C et environ 160 °C, ou les couches de l'insert de transpondeur contenant du polycarbonate (PC) sont stratifiées à des températures comprises entre environ 140 °C et environ 260 °C.

9. Document de valeur et de sécurité (10) avec un insert de transpondeur (14) selon l'une des revendications précédentes, dans lequel l'antenne (24) est appliquée sous la forme d'une antenne additive, d'une antenne soustractive, d'une antenne gravée, d'une antenne imprimée ou d'une antenne filaire sur la couche support d'antenne (16).

10. Document de valeur et de sécurité (10) avec un insert de transpondeur (14) selon l'une des revendications précédentes, dans lequel l'insert de transpondeur (14) est relié à la couverture de document (12) par une couche de colle, de préférence par une colle à base d'eau ou par une feuille (30) activable par la chaleur, par exemple thermodurcissable.

11. Document de valeur et de sécurité (10) avec un insert de transpondeur (14) selon l'une des revendications précédentes, dans lequel l'ensemble de la structure de la couverture de document (12) avec l'insert de transpondeur (14) est un stratifié à trois couches : (i) la couverture de document (12), (ii) la couche support d'antenne (16) avec l'antenne (24) et le module à puce de transpondeur (26), et (iii) la deuxième couche (22) pour le module à puce de transpondeur (26), la couche support d'antenne (16) étant tournée vers la couverture de document (12) et la couche (22) étant reliée à la couche support d'antenne (16), un évidement (22a) pour le module à puce de transpondeur (26) en contact avec l'antenne (24) étant prévu dans la couche (22), et la couche support d'antenne (16) et la deuxième couche (22) étant formées de la feuille thermoplastique stratifiable et/ou de l'autre feuille thermoplastique.

12. Document de valeur et de sécurité (10) avec un insert de transpondeur (14) selon l'une des revendications précédentes, dans lequel la première couche (18) est stratifiée avec la couche support d'antenne (16) de telle façon que l'antenne (24) soit enfouie au moins partiellement dans les couches (16, 18), et/ou une épaisseur de la première couche (18) étant déterminée de telle façon que le module à puce de transpondeur (26) soit complètement renfermé par les couches (16, 18) sur ses surfaces latérales, et/ou le matériau de la première couche (18) ayant pénétré tout autour du module à puce de transpondeur (26) dans l'évidement (16c, 18a, 20a).

13. Procédé de fabrication d'un document de valeur et de sécurité, en particulier d'un document personnel, d'un passeport ou analogue, en utilisant un insert de transpondeur stratifié composé de feuilles, présentant trois couches :
- une couche support d'antenne (16) composée d'une feuille thermoplastique stratifiable qui porte une antenne (24) sur sa surface (16a) opposée à la couverture de document (12),
- une première couche (18) reliée à la couche support d'antenne (16), composée d'une feuille thermoplastique stratifiable, et
- une couche fonctionnelle (20) reliée à la première couche (18), réalisée comme couche supérieure,
- un évidement étant prévu dans la couche fonctionnelle (20) pour un module à puce de transpondeur (26) en contact avec l'antenne (24),
**caractérisé en ce qu'**un évidement (16c, 18a, 20a) est prévu dans la première couche (18) pour recevoir le module à puce de transpondeur (26),
- l'insert de transpondeur étant fixé sur une couverture de document au moyen d'un processus de stratification et/ou avec une colle.

14. Procédé de fabrication d'un document de valeur et de sécurité selon la revendication 12, selon lequel l'insert de transpondeur est stratifié sur la couverture de document, et dans lequel le dos du passeport avec l'insert de transpondeur est de préférence fabriqué en une seule opération de stratification.

15. Procédé de fabrication d'un document de valeur et de sécurité selon la revendication 12 ou 13, selon lequel, lors de la stratification à haute pression et haute température, plusieurs couches, de préférence de matériau identique, sont reliées ensemble de façon à former un insert de transpondeur.
